# EUROPÄISCHE PATENTANMELDUNG

(11) **EP 1 369 840 A2**
(43) Veröffentlichungstag der Anmeldung: **10.12.2003**
(21) Anmeldenummer: 03008592.2
(22) Anmeldetag: 14.04.2003
(51) Int. Cl.: G09F 3/02

(54) **Etikett zum Verdecken von Informationen**

(30) Priorität: 03.05.2002 DE 20207023 U
(71) Anmelder: Schreiner Group GmbH & Co. KG, 85764 Oberschleissheim (DE)
(72) Erfinder: Grötzner, Roland, 85716 Unterschleissheim (DE)
(74) Vertreter: Kehl, Günther, Dipl.-Phys.

(57) **Zusammenfassung**

Bei einem Etikett zum Verdecken von Informationen (4) mit einer Grundschicht (1) und wenigstens einer durch Reiben entfernbaren Schicht (2, 8), die auf der Grundschicht aufgebracht ist, ist vorgesehen daß zur Erschwerung von unlauteren Manipulationsversuchen auf der durch Reiben entfernbaren Schicht (2, 8) auf der der Grundschicht gegenüberliegenden Seite eine haftabweisende Schicht (3) ausgebildet ist.

## Beschreibung

Die Erfindung betrifft Etiketten zum Verdecken von Informationen, insbesondere solche, die eine durch Reiben entfernbare Schicht aufweisen.

Etiketten mit einer durch Reiben entfernbaren Schicht, sog. "Rubbeletiketten", finden sich auf zahlreichen Anwendungsgebieten. Insbesondere beim Verkauf von Telefonkarten und dergleichen, werden die zugehörigen Geheimnummern (PINs) auf einem Bogen oder der Karte selbst mitgeliefert. Um die PINs vor der unbefugten Einsichtnahme durch Dritte zu schützen, sind diese mit Hilfe von Etiketten abgedeckt, die eine opake Rubbelschicht enthalten, die sich durch Reiben entfernen lässt, so dass dann die PIN zum Vorschein kommt.

Häufig wird versucht, die Rubbelschicht zu manipulieren, um an die darunter verborgenen Informationen zu gelangen. Hierzu wird die Rubbelschicht als ganzes mittels eines Klebestreifens entfernt und nach Einsichtnahme mit dem Klebeband wieder zurückgesetzt. Wenn der eigentliche Adressat der PIN bemerkt, dass die Rubbelschicht durch ein Klebeband "versiegelt" wurde, hat sich der unbefugte Dritte bereits die verdeckte PIN zu eigen gemacht und, etwa im Falle einer Telefonkarte, bereits dem eigentlichen Eigentümer derselben Schaden zugefügt. Es ist zwar hilfreich, Vorkehrungen zu treffen, so dass ein unbefugtes Manipulieren von Rubbelschichten frühestmöglich erkannt wird, jedoch kann es auch bei der frühestmöglichen Erkennung bereits zu einem Missbrauch der PIN durch Dritte gekommen sein.

Es besteht daher der Wunsch, eine Manipulation möglichst von vornherein zu verhindern, und es ist daher die Aufgabe der vorliegenden Erfindung, ein Etikett zum Verdecken von Informationen zur Verfügung zu stellen, durch welches eine Manipulation der genannten Art verhindert wird.

Erfindungsgemäß wird diese Aufgabe gelöst durch ein Etikett zum Verdecken von Informationen mit einer Grundschicht und wenigstens einer durch Reiben entfernbaren Schicht, die auf der Grundschicht aufgebracht ist, wobei auf der durch Reiben entfernbaren Schicht auf der der Grundschicht gegenüberliegenden Seite eine haftabweisende Schicht ausgebildet ist. Die haftabweisende Schicht kann aufgeklebt oder aufgedruckt sein und wird beim Abrubbeln zusammen mit der durch Reiben entfernbaren Schicht entfernt.

Versucht ein unbefugter Dritter, die Rubbelschicht mit einem Klebestreifen abzulösen, verhindert die dehäsive Eigenschaft der haftabweisenden Schicht, dass die Rubbelschicht an dem Klebestreifen haftet. Dadurch lässt sich die Rubbelschicht nicht mehr von der Grundschicht ablösen, und die Information bleibt geschützt.

Nach einer vorteilhaften Ausführungsform der Erfindung handelt es sich bei der Grundschicht um eine Schrumpffolie. Oft wird versucht, das gesamte Rubbeletikett durch Zuführung von Wärme von dem die verdeckte Information tragenden Trägermaterial zu lösen; derartige Manipulationen werden durch das Ausbilden der Grundschicht als Schrumpffolie leicht erkennbar gemacht.

Um das Ablösen des Etiketts vom Trägermaterial mit den verdeckten Informationen durch Messer oder dergleichen zu erschweren und kenntlich zu machen, ist in der Grundschicht wenigstens eine Sicherheitsstanzung vorgesehen. Hierdurch wird das Etikett beim Ablöseversuch zerstört, so dass eine Manipulation sofort erkennbar ist.

Vorteilhafterweise weist die durch Reiben entfernbare Schicht einen Klebstoff auf. Hierdurch kann die Rubbelschicht leichter und nahezu rückstandsfrei entfernt werden.

Statt nur einer Rubbelschicht können vorteilhafterweise mehrere durch Reiben entfernbare Schichten vorgesehen sein, die eine flexiblere Gestaltung des Etiketts ermöglichen. Diese können auch unterschiedliche Farben aufweisen.

Zwischen der durch Reiben entfernbaren Schicht und der haftabweisenden Schicht kann nach einer weiteren Ausführungsform des erfindungsgemäßen Etiketts eine Temperaturindikatorschicht vorgesehen sein, die eine Wärmemanipulation anzeigt. Hierzu kann zum Beispiel eine thermochromische Farbe aufgetragen sein, die bei Wärmezufuhr einen Farbumschlag erfährt. Hierdurch kann das Erkennen von Manipulationen durch Wärme erleichtert werden.

Zum Kennzeichnen des Etiketts kann wenigstens eine durch Drucken oder Stanzen aufgebrachte Beschriftung vorgesehen sein. Zu weiteren Konfektionierung und Handhabung kann auf der Unterseite der Grundschicht des Etiketts eine Klebstoffschicht vorgesehen sein, die das spätere, insbesondere maschinelle, Verspenden als Selbstklebeetikett erleichtert.

Nachfolgend werden die Erfindung und ihre vorteilhaften Ausführungsformen anhand der Figuren 1 bis 3 schematisch näher erläutert. Dabei zeigen:
Fig. 1 eine erste Ausführungsform der Erfindung in seitlicher Ansicht;
Fig. 2 eine zweite Ausführungsform der Erfindung in seitlicher Ansicht; und
Fig. 3 eine dritte Ausführungsform der Erfindung in seitlicher Ansicht.

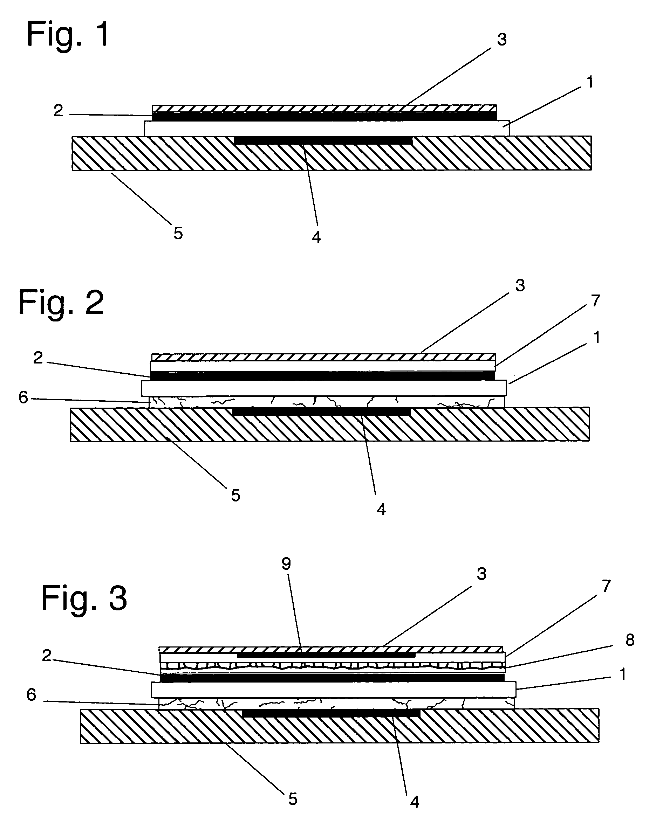

In Fig. 1 ist eine erste Ausführungsform der Erfindung dargestellt. Das erfindungsgemäße Etikett weist eine wenigstens teilweise transparente Grundschicht 1 auf, die auf einem Trägermaterial 5, beispielsweise einem Briefbogen oder dergleichen, über den zu verdeckenden Informationen 4 (PIN, Kodenummer oder ähnliches) aufgebracht ist. Auf der Grundschicht 1 ist eine Rubbelschicht 2 aufgebracht. Diese kann zum Beispiel aufgedruckt sein und zusätzlich einen Klebstoff (nicht gezeigt) enthalten, um das rückstandsfreie Ablösen zu erleichtern. Auf der Rubbelschicht 2 befindet sich eine haftabweisende Schicht 3, die sich zusammen mit der Rubbelschicht 2 durch Reiben entfernen lässt, um an die darunter liegenden Informationen 4 zu gelangen. Die dehäsive Wirkung der haftabweisenden Schicht 3 kann zum Beispiel durch eine Silikonisierung erreicht werden, die verhindert, dass die Rubbelschicht 2 mit einem Klebestreifen von der Grundschicht 1 entfernt werden kann. Wird nämlich ein Klebestreifen auf die Schicht 3 geklebt, so greift dieser die Schicht 3 nicht, und das Ablösen der Rubbelschicht 2 wird verhindert.

Fig. 2 zeigt eine weitere Ausführungsform der Erfindung. Das Etikett ist hier als Selbstklebeetikett ausgebildet und weist an der Unterseite der Grundschicht 1 eine Klebeschicht 6 auf. Die Klebeschicht sollte wenigstens im Bereich der verdeckten Informationen 4 transparent sein, um nach dem "Abrubbeln" der Rubbelschicht 2 dem Betrachter die Sicht auf die Informationen zu verschaffen. Zur Verbesserung der Erkennung von Manipulationen am Etikett kann zum Beispiel eine Schicht aus thermochromischer Farbe 7 auf der Rubbelschicht 2 aufgebracht sein, deren Farbe bei der Zuführung von Wärme umschlägt. Die Schicht kann anwender- oder herstellerseitig mit einem Aufdruck 9 bedruckt werden oder zumindest bedruckbar sein (s. Fig. 3). Weiter können in der Grundschicht Sicherheitsstanzungen vorgesehen sein, die das Ablösen des Etiketts und damit das Freilegen der Informationen mit Hilfe von spitzen Gegenständen wie Messer oder dergleichen zu verhindern oder wenigstens irreversibel kenntlich machen. Zudem oder alternativ kann die Grundschicht 1 als Schrumpffolie ausgebildet sein, die sich beim Versuch, das Etikett durch Erwärmen abzulösen, zusammenzieht und eine Manipulation irreversibel anzeigt.

Oft werden mehrere Informationen (PINs und Super-PINs) durch ein Etikett verdeckt, so dass es wünschenswert ist, dass die mehreren Informationen separat freigelegt werden. Hierzu können dann mehrere Rubbelschichten 2, 8 übereinander, siehe Fig. 3, oder auch nebeneinander (nicht gezeigt) vorgesehen sein. Fig. 3 zeigt eine weitere Ausführungsform mit mehreren Rubbelschichten 2, 8. Die verschiedenen Rubbelschichten 2, 8 können zur Kenntlichmachung (zum Beispiel der Art der darunter befindlichen Informationen) verschiedene Farben aufweisen.

## Patentansprüche

1. Etikett zum Verdecken von Informationen (4) mit einer Grundschicht (1) und wenigstens einer durch Reiben entfernbaren Schicht (2, 8), die auf der Grundschicht aufgebracht ist, wobei auf der durch Reiben entfernbaren Schicht (2, 8) auf der der Grundschicht gegenüberliegenden Seite eine haftabweisende Schicht (3) ausgebildet ist.

2. Etikett nach Anspruch 1, **dadurch gekennzeichnet, dass** die haftabweisende Schicht (3) aufgedruckt ist.

3. Etikett nach Anspruch 1, **dadurch gekennzeichnet, dass** die haftabweisende Schicht (3) aufgeklebt ist.

4. Etikett nach einem der vorherigen Ansprüche, **dadurch gekennzeichnet, dass** es sich bei der Grundschicht (1) um eine Schrumpffolie handelt.

5. Etikett nach einem der vorherigen Ansprüche, **dadurch gekennzeichnet, dass** in der Grundschicht (1) wenigstens eine Sicherheitsstanzung vorgesehen ist.

6. Etikett nach einem der vorherigen Ansprüche, **dadurch gekennzeichnet, dass** in der durch Reiben entfernbaren Schicht (2, 8) ein Klebstoff vorgesehen ist.

7. Etikett nach einem der vorherigen Ansprüche, **dadurch gekennzeichnet, dass** mehrere durch Reiben entfernbare Schichten (2, 8) mit unterschiedlichen Farben vorgesehen sind.

8. Etikett nach einem der vorherigen Ansprüche, **dadurch gekennzeichnet, dass** zwischen der durch Reiben entfernbaren Schicht (2, 8) und der haftabweisenden Schicht (3) eine Temperaturindikatorschicht (7) vorgesehen ist.

9. Etikett nach einem der vorherigen Ansprüche, **dadurch gekennzeichnet, dass** es wenigstens eine durch Drucken oder Stanzen aufgebrachte Beschriftung aufweist.

10. Etikett nach einem der vorherigen Ansprüche, **dadurch gekennzeichnet, dass** es auf der Unterseite der Grundschicht (1) eine Klebstoffschicht (6) aufweist.
